# EUROPÄISCHE PATENTSCHRIFT

(11) **EP 3 871 006 B1**
(45) Veröffentlichungstag und Bekanntmachung des Hinweises auf die Patenterteilung: **07.01.2026**
(21) Anmeldenummer: 19790175.4
(22) Anmeldetag: 16.10.2019
(51) Int. Cl.: G01S 13/95, G01S 17/95

(54) **REGENERKENNUNG MIT EINEM UMGEBUNGSSENSOR ZUR PUNKTWEISEN ERFASSUNG EINER UMGEBUNG EINES FAHRZEUGS, INSBESONDERE MIT EINEM LIDAR-BASIERTEN UMGEBUNGSSENSOR**
RAIN DETECTION BY MEANS OF AN ENVIRONMENT SENSOR FOR CAPTURING THE ENVIRONMENT OF A VEHICLE POINT BY POINT, IN PARTICULAR BY MEANS OF A LIDAR-BASED ENVIRONMENT SENSOR
SYSTÈME DE DÉTECTION DE PLUIE COMPRENANT UN CAPTEUR D'ENVIRONNEMENT SERVANT À DÉTECTER POINT PAR POINT UN ENVIRONNEMENT D'UN VÉHICULE EN PARTICULIER AVEC UN CAPTEUR D'ENVIRONNEMENT LIDAR

(30) Priorität: 24.10.2018 DE 102018126506
(43) Veröffentlichungstag der Anmeldung: 01.09.2021
(73) Patentinhaber: Valeo Schalter und Sensoren GmbH, 74321 Bietigheim-Bissingen (DE)
(72) Erfinder: FISCHER, Michael, 96317 Kronach Neuses (DE); GOWDA, Archan Gangadhara, 96317 Kronach Neuses (DE); PUHLFUERST, Georg, 96317 Kronach Neuses (DE); MATZ, Marcel, 96317 Kronach Neuses (DE)
(74) Vertreter: Pothmann, Karsten
(86) Internationale Anmeldenummer: PCT/EP2019/078023
(87) Internationale Veröffentlichungsnummer: WO 2020/083716

(56) Entgegenhaltungen:
- WO-A1-2014/168851
- DE-A1- 102009 000 472
- US-A1- 2014 324 266
- US-A1- 2017 315 230
- US-A1- 2018 024 229

## Beschreibung

Die vorliegende Erfindung betrifft ein Verfahren zur Erkennung von Niederschlag mit einem Umgebungssensor zur punktweisen Erfassung einer Umgebung eines Fahrzeugs.

Auch betrifft die vorliegende Erfindung ein Fahrunterstützungssystem für ein Fahrzeug mit einem Umgebungssensor zur punktweisen Erfassung einer Umgebung des Fahrzeugs und einer Recheneinrichtung, die über einen Datenübertragungsverbindung miteinander verbunden sind, wobei das Fahrunterstützungssystem ausgeführt ist, das obige Verfahren auszuführen.

Niederschlag umfasst jegliche Art von Regen, Schnee oder auch Hagel, der in Tropfen, Flocken oder auch Körnern in unterschiedlichen Größen durch die Luft auf den Boden fällt. Niederschlag kann zu einer Veränderung von Fahrbahneigenschaften oder allgemein Fahreigenschaften des Fahrzeugs auf der Fahrbahn führen. Darüber hinaus kann Niederschlag eine Wahrnehmung der Umgebung des Fahrzeugs beeinträchtigen, sowohl durch einen menschlichen Fahrzeugführer wie auch durch Umgebungssensoren, wie sie in Fahrunterstützungssystemen von Fahrzeugen in zunehmendem Maße verwendet werden, um die Umgebung des Fahrzeugs zu erfassen. Daher ist es wichtig, Niederschlag zuverlässig zu erfassen, um beispielsweise Fahrparameter abhängig von dem Niederschlag anpassen zu können.

In diesem Zusammenhang sind aus der US 9 207 323 B2 beispielhafte Verfahren und Systeme zum Erfassen von Wetterbedingungen einschließlich nasser Oberflächen unter Verwendung von fahrzeugeigenen Sensoren bekannt. Ein solches Verfahren umfasst das Empfangen von Laserdaten, die für eine Umgebung eines Fahrzeugs gesammelt wurden. Das Verfahren umfasst auch das Bestimmen von Laserdatenpunkten, die mit einem oder mehreren Objekten in der Umgebung assoziiert sind, und basierend auf Laserdatenpunkten, die nicht mit dem einen oder den mehreren Objekten in der Umgebung assoziiert sind, Identifizieren einer Anzeige, dass eine Oberfläche ist, auf der das Fahrzeug fährt nass. Das Verfahren kann ferner das Empfangen von für die Umgebung des Fahrzeugs erfassten Radardaten, die ein Vorhandensein des einen oder der mehreren Objekte in der Umgebung des Fahrzeugs anzeigen, und das Identifizieren der Anzeige, dass die Oberfläche, auf der das Fahrzeug fährt, nass ist, weiter basierend auf Laserdatenpunkten, die nicht mit dem einen oder den mehreren Objekten in der durch die Radardaten angezeigten Umgebung verbunden sind, umfassen. Ein ähnliches, Lidar-basiertes System ist in WO2014168851 offenbart.

Das obige aus dem Stand der Technik bekannte Verfahren basiert also darauf, Punkte einer Punktewolke nach ihrer Objektzugehörigkeit zu klassifizieren und daraus Rückschlüsse auf das Wetter zu ziehen. Dieses Verfahren ist sehr aufwendig, denn es erfordert eine Verarbeitung von allen Punkten der Objektwolke.

Ausgehend von dem oben genannten Stand der Technik liegt der Erfindung somit die Aufgabe zugrunde, ein Verfahren zur Erkennung von Niederschlag sowie ein Fahrunterstützungssystem zur Durchführung des Verfahrens, jeweils der oben genannten Art, anzugeben, die eine effiziente Erfassung von Niederschlag mit geringem Aufwand ermöglichen.

Die Lösung der Aufgabe erfolgt erfindungsgemäß durch die Merkmale der unabhängigen Ansprüche. Vorteilhafte Ausgestaltungen der Erfindung sind in den Unteransprüchen angegeben.

Erfindungsgemäß ist somit ein Verfahren zur Erkennung von Niederschlag nach Anspruch 1.

Erfindungsgemäß ist außerdem ein Fahrunterstützungssystem für ein Fahrzeug mit einem Umgebungssensor zur punktweisen Erfassung einer Umgebung des Fahrzeugs und einer Recheneinrichtung, die über einen Datenübertragungsverbindung miteinander verbunden sind, angegeben, wobei das Fahrunterstützungssystem ausgeführt ist, das obige Verfahren auszuführen.

Grundidee der vorliegenden Erfindung ist es also, Niederschlag durch eine Überwachung von einer Anzahl Regionen innerhalb des Sichtfelds des Umgebungssensors zu erkennen. Dies hat den Vorteil, dass nur ein Teilbereich des Sichtfelds des Umgebungssensors betrachtet werden muss, so dass das Verfahren mit einem geringen Aufwand durchgeführt werden kann. Die Erfassung des Niederschlags basiert darauf, dass bei Niederschlag eine bestimmte Anzahl von Punkten in der wenigstens einen Region von dem Umgebungssensor erfasst wird, die keinem Objekt zugeordnet werden können. Diese Punkte korrespondieren mit dem Niederschlag. Entsprechend sind diese Punkte auch nicht einem Objekt zugeordnet oder als Objekt erfasst. Durch die Beschränkung der Evaluierung der Umgebungspunkte auf die wenigstens eine Region kann die Verarbeitung einfach und effizient durchgeführt werden.

Das Fahrzeug kann ein an sich beliebiges Fahrzeug sein, welches von einem menschlichen Fahrzeugführer geführt wird, oder welches autonom oder teil-autonom fahren kann. Das Fahrzeug ist vorzugsweise mit einem Fahrunterstützungssystem ausgeführt, welches einen entsprechenden Umgebungssensor aufweist und darauf basierend beispielsweise eine Umgebungskarte erstellt, in welcher die von dem Umgebungssensor erfassten Punkte markiert sind. Somit kann das erfindungsgemäße Verfahren besonders effizient durchgeführt werden, da keine eigene Erfassung der Punkte in der Umgebung des Fahrzeugs durchgeführt werden muss. Erfindungsgemäß ist dann lediglich eine zusätzliche Verarbeitung von bereits gewonnenen Daten erforderlich.

Das Fahrunterstützungssystem ist hier entweder ein eigenständiges Fahrunterstützungssystem, welches dazu ausgeführt ist, Niederschlag zu erfassen und dem Fahrzeugführer anzuzeigen oder den Niederschlag an ein anderes Fahrunterstützungssystem des Fahrzeugs zu melden. Alternativ kann das Fahrunterstützungssystem integral mit weiteren Fahrunterstützungssystemen des Fahrzeugs ausgeführt sein. Das Fahrunterstützungssystem kann dabei eine eigenständige Recheneinrichtung aufweisen, oder die Recheneinrichtung ist eine geteilte Recheneinrichtung zur Durchführung verschiedener Aufgaben verschiedener Fahrunterstützungssysteme.

Die Recheneinrichtung kann eine ECU (Electronic Control Unit), also ein Steuergerät des Fahrzeugs sein. Die Recheneinrichtung umfasst beispielsweise einen Prozessor und einen Speicher, in dem ein Programm gespeichert ist oder gespeichert werden kann, welches auf dem Prozessor der Recheneinrichtung abgearbeitet werden kann. Dabei ist eine zumindest teilweise Implementierung der Recheneinrichtung als FPGA möglich.

Die Datenübertragungsverbindung kann beispielsweise als im Automobilbereich üblicher CAN-Bus ausgeführt sein. Prinzipiell können aber auch andere an sich bekannte Bussysteme verwendet werden. Die Recheneinrichtung kann über die Datenübertragungsverbindung den Umgebungssensor konfigurieren und/oder ansteuern und außerdem von dem Umgebungssensor ermittelte Datenpunkte empfangen. Alternativ können die Datenpunkte von dem Umgebungssensor über die Datenübertragungsverbindung an eine weitere Recheneinheit übertragen werden, welche beispielsweise eine Erkennung von Objekten durchführt und/oder eine Umgebungskarte mit den von dem Umgebungssensor erfassten Punkten erzeugt. Diese Daten können dann von dieser anderen Recheneinheit über die Datenübertragungsverbindung weiter an die Recheneinrichtung des Fahrunterstützungssystems übertragen werden.

Der Umgebungssensor zur punktweisen Erfassung der Umgebung des Fahrzeugs kann prinzipiell unterschiedlich ausgeführt sein. In vorteilhafter Ausgestaltung der Erfindung ist der Umgebungssensor zur punktweisen Erfassung einer Umgebung des Fahrzeugs als LiDAR-basierter Umgebungssensor ausgeführt. Es erfolgt eine Erfassung der Umgebung des Fahrzeugs mit Laserpulsen, die an Objekten in der Umgebung des Fahrzeugs reflektiert werden. Auch an Niederschlag erfolgt eine solche Reflektion, wodurch entsprechende Umgebungspunkte von dem LiDAR-basierten Umgebungssensor erzeugt werden.

Alternativ kann der Umgebungssensor zur punktweisen Erfassung einer Umgebung des Fahrzeugs als Radar-basierter Umgebungssensor oder als optische Kamera ausgeführt sein. Bei einem Radar-basierten Umgebungssensor erfolgt die Erfassung vergleichbar wie bei dem LiDAR-basierten Umgebungssensor, wobei statt der Laserpulse Radarpulse erzeugt und deren Reflektionen an den Objekten in der Umgebung des Fahrzeugs erfasst werden. Bei einer optischen Kamera werden die Punkte allein durch Bildverarbeitung bestimmt.

Das Erfassen von Umgebungspunkten mit dem Umgebungssensor erfolgt innerhalb von dessen Sichtfeld. Abhängig von der Art des Umgebungssensors kann das Sichtfeld beispielsweise einen Winkel von 120° bis 150° bezogen auf eine Bodenfläche umfassen, was ein typischer Wert beispielsweise für einen LiDAR-basierten Umgebungssensor ist. Alternativ kann das Sichtfeld auch einen Winkel von beispielsweise bis zu 180° oder sogar mehr umfassen, wie es für optische Kameras, insbesondere Weitwinkelkameras, verbreitet ist. Bei Radar-basierten Umgebungssensoren kann das Sichtfeld sogar einen Winkel von bis zu 360° umfassen. In vertikaler Richtung ist das Sichtfeld des Umgebungssensors typischerweise deutlich kleiner.

Das Auswählen wenigstens einer Region innerhalb des Sichtfelds des Umgebungssensors kann prinzipiell eine oder mehrere beliebig geformte Regionen umfassen. Besonders relevant ist dabei ein Bereich in Fahrtrichtung vor dem Fahrzeug, da das Fahrzeug in diesem Bereich fahren wird und der Niederschlag in diesem Bereich direkten Einfluss auf Fahrbahneigenschaften oder allgemein Fahreigenschaften des Fahrzeugs auf der Fahrbahn haben kann. Die Region kann sich insbesondere in vertikaler Richtung über das gesamte Sichtfeld des Umgebungssensors oder nur über einen Teilbereich davon erstrecken. Jede Region ist vorzugsweise derart ausgestaltet, dass sich die Ausdehnung entlang der vertikalen Richtung nicht ändert. Das Auswählen der wenigstens einen Region innerhalb des Sichtfelds des Umgebungssensors muss prinzipiell nur einmal durchgeführt werden, auch bei wiederholter bzw. kontinuierlicher Durchführung des Verfahrens. Der Schritt zum Auswählen der wenigstens einen Region kann entsprechend zu einem prinzipiell beliebigen Zeitpunkt durchgeführt werden, also auch in einer anderen als der hier beispielhaft genannten Abfolge der einzelnen Verfahrensschritte.

Das Bestimmen einer Punktedichte von mit dem Umgebungssensor erfassten Umgebungspunkten in der wenigstens einen Region kann als Bestimmen einer dreidimensionalen Punktedichte erfolgen, wobei dann das Volumen der Region bestimmt werden muss. Alternativ kann eine zweidimensionale Bestimmung erfolgen, indem die Punkte in der Region auf eine Grundfläche der jeweiligen Region projiziert werden, und die Punktedichte in der Grundfläche bestimmt wird.

Das Erkennen von Niederschlag durch Vergleichen der Punktedichte in der wenigstens einen Region mit einem vorgegebenen Grenzwert basiert beispielsweise auf einem empirisch ermittelten Grenzwert. Prinzipiell kann eine dynamische Anpassung des Grenzwerts erfolgen, beispielsweise abhängig von verschiedenen Fahrsituationen oder Umgebungsbedingungen.

In Ausgestaltung der Erfindung umfasst das Verfahren ein Überprüfen der wenigstens einen Region auf Präsenz eines Objekts, und das Erkennen von Niederschlag durch Vergleichen der Punktedichte in der wenigstens einen Region mit einem vorgegebenen Grenzwert erfolgt in solchen Regionen, in den sich kein Objekt befindet. Bei Präsenz eines Objekts in einer Region liegt zwangsläufig eine große Anzahl von Punkten innerhalb dieser betrachteten Region. Diese Umgebungspunkte sind allerdings nicht Niederschlag zuzuordnen und würden das Erkennen von Niederschlag daher verfälschen. Um das Verfahren einfach zu gestalten, werden daher solche Regionen, in denen sich wenigstens ein Objekt befindet, nicht zur Ermittlung von Niederschlag herangezogen.

In vorteilhafter Ausgestaltung der Erfindung umfasst das Überprüfen der wenigstens einen Region auf Präsenz eines Objekts ein Überprüfen, ob in allen Regionen ein Objekt präsent ist, und das Erkennen von Niederschlag bei Präsenz von Objekten in allen Regionen umfasst ein Erkennen von Niederschlag basierend auf einer vorherigen Erkennung von Niederschlag. Wenn also in allen betrachteten Regionen wenigstens ein Objekt vorhanden ist, kann keine aktuelle Erkennung von Niederschlag basierend auf dem Vergleich der Punktedichte in der wenigstens einen Region mit dem vorgegebenen Grenzwert durchgeführt werden. Da die Objekte beim Fahren vielfach dynamisch sind und sich bewegen, wird die nächste Erkennung von Niederschlag erst durchgeführt, wenn sich in wenigstens einer Region kein Objekt befindet. Der vorherige Zustand für Niederschlag wird beibehalten. Alternativ kann eine Auswahl von wenigstens einer Region neu durchgeführt werden, um so wenigstens eine Region zu erhalten, in der kein Objekt präsent ist.

In vorteilhafter Ausgestaltung der Erfindung umfasst das Auswählen wenigstens einer Region innerhalb des Sichtfelds des Umgebungssensors ein Auswählen einer Mehrzahl Regionen, und das Erkennen von Niederschlag durch Vergleichen der Punktedichte in der Mehrzahl Region mit einem vorgegebenen Grenzwert umfasst ein Erkennen von Niederschlag durch Bestimmen einer Anzahl der Regionen, in denen der Vergleich der Punktedichte mit dem vorgegebenen Grenzwert Niederschlag anzeigt. Es wird also die Anzahl der Regionen mit Niederschlag mit der Anzahl der Regionen ohne Niederschlag verglichen. Bei einer Berücksichtigung von einer Mehrzahl Regionen zur Erkennung von Niederschlag wird somit zunächst für jede Region individuell ermittelt, ob Niederschlag erkannt wird. Anschließend wird beispielsweise ein Mittelwert gebildet, oder Niederschlag wird erkannt, indem in einem bestimmten, vorgegebenen Anteil der Regionen Niederschlag erkannt wird.

In vorteilhafter Ausgestaltung der Erfindung umfasst das Auswählen wenigstens einer Region innerhalb des Sichtfelds des Umgebungssensors ein Auswählen einer Mehrzahl Regionen, und das Erkennen von Niederschlag durch Vergleichen der Punktedichte in der Mehrzahl Region mit einem vorgegebenen Grenzwert umfasst ein Vergleichen der Punktedichte in der Mehrzahl Region mit dem vorgegebenen Grenzwert. Hier wird also die Punktedichte unter Berücksichtigung aller Regionen bestimmt, d.h. die Punktedichte wird für alle betrachteten Regionen gemeinsam bestimmt. Dabei können unterschiedliche Ausgestaltungen und Größen der Regionen entsprechend berücksichtigt werden.

In vorteilhafter Ausgestaltung der Erfindung umfasst das Auswählen wenigstens einer Region innerhalb des Sichtfelds des Umgebungssensors ein Auswählen der wenigstens einen Region abhängig von verschiedenen Empfindlichkeiten des Umgebungssensors in dem Sichtfeld. Die unterschiedlichen Empfindlichkeiten können sich beispielsweise abhängig von unterschiedlichen Erfassungsgenauigkeiten ergeben. Die verschiedenen Empfindlichkeiten können prinzipiell Eigenschaften des entsprechenden Umgebungssensors sein. So kann beispielsweise in einem in der horizontalen Ebene mittleren Winkelbereich eine genauere Winkelauflösung verwendet werden, als in Randbereichen des Sichtfelds. Alternativ oder zusätzlich können sich die verschiedenen Empfindlichkeiten durch eine Konfiguration oder Ansteuerung des entsprechenden Umgebungssensors ergeben.

**In** vorteilhafter Ausgestaltung der Erfindung umfasst das Verfahren eine zusätzlichen Schritt zum Erfassen einer Anzahl von Regionen, in den sich ein Objekt befindet, und das Verfahren umfasst einen Schritt zur Durchführung einer veränderten Auswahl wenigstens einer Region innerhalb des Sichtfelds des Umgebungssensors, wenn die Anzahl von Regionen, in den sich ein Objekt befindet, größer als ein vorgegebener Grenzwert ist. Dabei kann eine prinzipiell beliebige Auswahl der Regionen erfolgen, die zumindest disjunkt zu der vorherigen Auswahl der Regionen ist. Eine zumindest teilweise Überlappung der Regionen ist also möglich. So kann das Erkennen von Niederschlag unabhängig von vorhandenen Objekten stets zuverlässig durchgeführt werden.

In vorteilhafter Ausgestaltung der Erfindung umfasst das Bestimmen einer Punktedichte von mit dem Umgebungssensor erfassten Umgebungspunkten in der wenigstens einen Region ein Bestimmen der Punktedichte durch Dividieren einer Anzahl von Punkten einer jeweiligen Region durch eine Größe der jeweiligen Regionen. Dieser Verfahrensschritt kann sowohl für eine zwei-dimensionale Punktedichte, wobei eine Projektion der Punkte auf eine Grundfläche der Region erfolgt, wie auch für dreidimensionale Regionen erfolgen. Die zweidimensionale Betrachtung ist dabei besonders einfach durchzuführen. Sofern sich die Größen der einzelnen Regionen nicht verändern, können diese Größen einmal bestimmt werden, um darauf basierend das Verfahren durchzuführen.

In vorteilhafter Ausgestaltung der Erfindung umfasst das Bestimmen einer Punktedichte von mit dem Umgebungssensor erfassten Umgebungspunkten in der wenigstens einen Region ein Bestimmen einer gewichteten Punktedichte, wobei eine Punktedichte jeder Region mit einem Gewichtsfaktor multipliziert und anschließend die Summe der gewichteten Punktedichten durch eine Anzahl der Regionen dividiert wird. Durch die Gewichtung kann erreicht werden, dass Punktedichten in bestimmten Regionen stärker oder weniger stark bei der Erkennung von Niederschlag berücksichtigt werden. So kann beispielsweise eine Region in Fahrtrichtung von dem Fahrzeug stärker berücksichtigt werden, da Niederschlag dort unmittelbaren Einfluss auf Fahreigenschaften des Fahrzeugs haben kann. Beispielsweise können Bereiche, in denen typischerweise Feuchtigkeit von vorausfahrenden Fahrzeugen aufgewirbelt wird, sogenannter Sprühnebel, weniger stark berücksichtigt werden, da es sich hier nur um ein indirektes Anzeichen für Niederschlag handelt.

In vorteilhafter Ausgestaltung der Erfindung umfasst das Erkennen von Niederschlag durch Vergleichen der Punktedichte in der wenigstens einen Region mit einem vorgegebenen Grenzwert ein Vergleichen der Punktedichte in der wenigstens einen Region mit einer Mehrzahl vorgegebener Grenzwerte, wobei die Mehrzahl Grenzwerte verschiedene Intensitäten des Niederschlags angeben. Somit kann nicht nur Niederschlag als solcher erkannt werden, sondern es kann unterschieden werden beispielsweise zwischen leichtem Regen und starkem Regen, was eine jeweils individuelle Veränderung oder Anpassung der Fahreigenschaften erfordern kann. Dadurch kann die Fahrsicherheit des Fahrzeugs weiter verbessert werden. Beispielsweise kann bei starkem Regen eher Aquaplaning auftreten. Auch die Sicht wird bei starken Regen stärker beeinträchtigt als bei leichtem Regen, so dass eine entsprechende Unterscheidung hilfreich sein kann und die Fahrsicherheit verbessern kann. Dies betrifft einen menschlichen Fahrzeugführer wie auch verschiedenartige Umgebungssensoren.

In vorteilhafter Ausgestaltung der Erfindung umfasst das Vergleichen der Punktedichte in der wenigstens einen Region mit einer Mehrzahl vorgegebener Grenzwerte ein Vergleichen der Punktedichte in der wenigstens einen Region mit einer Mehrzahl vorgegebener Grenzwerte basierend auf einer Look-up Tabelle. Die Look-up Tabelle kann beispielsweise abhängig von einem Fahrzeugtyp, einem verwendeten Umgebungssensor oder anderen Charakteristika bestimmt werden, die einen Einfluss auf das Erkennen von Niederschlag haben können.

In vorteilhafter Ausgestaltung der Erfindung umfasst das Verfahren einen Schritt zum Ermitteln des vorgegebenen Grenzwerts basierend auf Sensorparametern des Umgebungssensors. Die Sensorparameter können beispielsweise eine Winkelauflösung des Umgebungssensors umfassen. Die Auflösung kann dabei für verschiedene Regionen oder auch innerhalb einzelner Regionen unterschiedlich sein.

Nachfolgend wird die Erfindung unter Bezugnahme auf die anliegende Zeichnung anhand bevorzugter Ausführungsformen näher erläutert. Die dargestellten Merkmale können sowohl jeweils einzeln als auch in Kombination einen Aspekt der Erfindung darstellen. Merkmale verschiedener Ausführungsbeispiele sind übertragbar von einem Ausführungsbeispiel auf ein anderes.

Es zeigt
- Fig. 1: eine schematische Ansicht eines Fahrzeugs gemäß einer ersten, bevorzugten Ausführungsform mit einem Fahrunterstützungssystem mit einem LiDAR-basierten Umgebungssensor und einer Recheneinrichtung in einer Draufsicht,
- Fig. 2: ein Ablaufdiagramm eines Verfahrens zur Erkennung von Niederschlag mit einem Umgebungssensor zur punktweisen Erfassung einer Umgebung eines Fahrzeugs in Übereinstimmung mit der ersten Ausführungsform,
- Fig. 3: eine beispielhafte Darstellung des Umgebungssensors aus Fig. 1 mit seinem Sichtfeld, in dem zwei Regionen markiert sind, in einer Draufsicht und in einer seitlichen Ansicht,
- Fig. 4: eine beispielhafte Darstellung des Umgebungssensors aus Fig. 1 mit seinem Sichtfeld, in dem zwei Regionen markiert sind, und einem Objekt, welches sich in eine der Regionen erstreckt, in einer Draufsicht und in einer seitlichen Ansicht, und
- Fig. 5: eine beispielhafte Darstellung des Umgebungssensors aus Fig. 1 mit seinem Sichtfeld, in dem zwei Regionen markiert sind, und einem Objekt, welches sich in beide Regionen erstreckt, in einer Draufsicht und in einer seitlichen Ansicht.

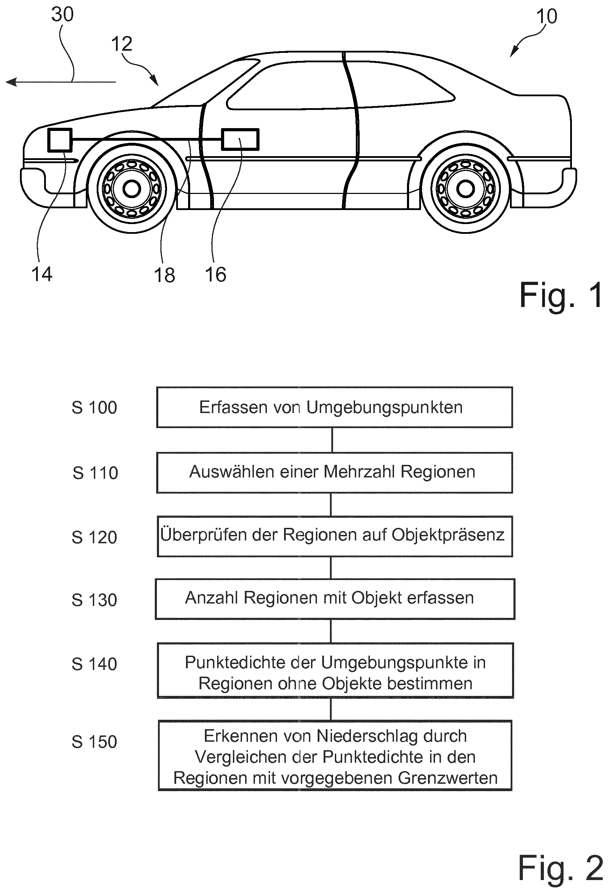

Die Figur 1 zeigt ein Fahrzeug 10 gemäß einer ersten, bevorzugten Ausführungsform der vorliegenden Erfindung.

Das Fahrzeug 10 ist ein an sich beliebiges Fahrzeug 10, welches von einem menschlichen Fahrzeugführer geführt wird, oder welches autonom oder teil-autonom fahren kann.

Das Fahrzeug 10 ist vorliegend mit einem Fahrunterstützungssystem 12 ausgeführt, das einen Umgebungssensor 14 zur punktweisen Erfassung einer Umgebung des Fahrzeugs 10 und eine Recheneinrichtung 16 umfasst. Der Umgebungssensor 14 und die Recheneinrichtung 16 sind über eine Datenübertragungsverbindung 18 miteinander verbunden.

Das Fahrunterstützungssystem 12 ist hier als eigenständiges Fahrunterstützungssystem 12 ausgeführt, um Niederschlag zu erfassen und dem Fahrzeugführer anzuzeigen oder den Niederschlag an ein anderes Fahrunterstützungssystem 12 des Fahrzeugs 10 zu melden.

Der Umgebungssensor 14 ist hier als LiDAR-basierter Umgebungssensor 14 ausgeführt. Es erfolgt eine Erfassung der Umgebung des Fahrzeugs 10 mit Laserpulsen, die an Objekten 26 in der Umgebung des Fahrzeugs 10 reflektiert werden. Auch an Niederschlag erfolgt eine solche Reflektion, wodurch entsprechende Umgebungspunkte von dem LiDAR-basierten Umgebungssensor 14 erzeugt werden.

Die Recheneinrichtung 16 ist in diesem Ausführungsbeispiel eine eigenständige Recheneinrichtung 16 des Fahrunterstützungssystems 12. Die Recheneinrichtung 16 ist als ECU (Electronic Control Unit), also ein Steuergerät des Fahrzeugs 10, ausgeführt. Die Recheneinrichtung 16 umfasst einen Prozessor und einen Speicher, in dem ein Programm gespeichert ist, welches auf dem Prozessor der Recheneinrichtung 16 abgearbeitet werden kann.

Die Datenübertragungsverbindung 18 ist in diesem Ausführungsbeispiel als im Automobilbereich üblicher CAN-Bus ausgeführt. Die Recheneinrichtung 16 kann über die Datenübertragungsverbindung 18 den Umgebungssensor 14 konfigurieren und/oder ansteuern und außerdem von dem Umgebungssensor 14 ermittelte Datenpunkte empfangen.

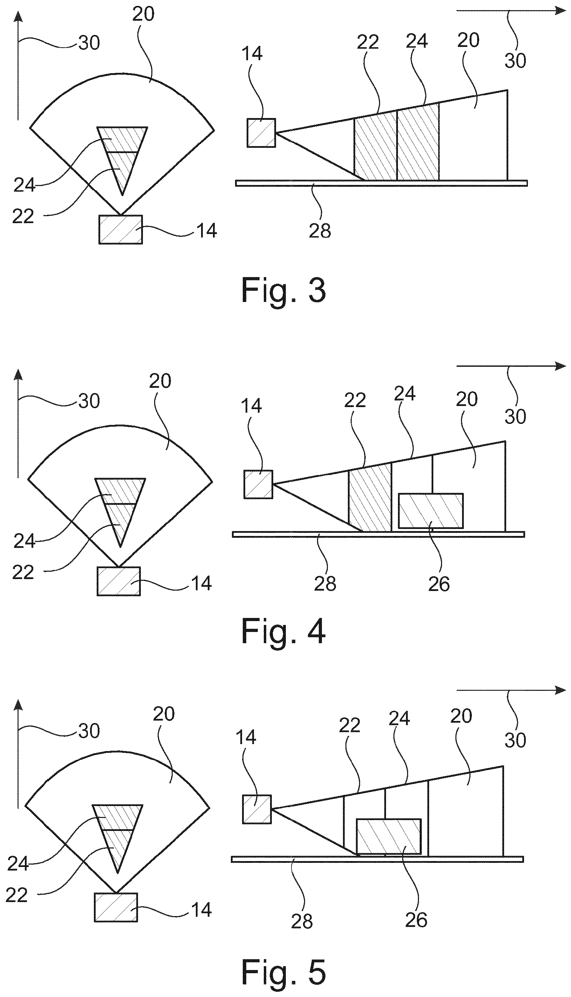

Nachstehend wird ein Verfahren zur Erkennung von Niederschlag mit einem Umgebungssensor 14 zur punktweisen Erfassung einer Umgebung eines Fahrzeugs 10 in Übereinstimmung mit der ersten Ausführungsform beschrieben. Das Verfahren ist als Ablaufdiagramm in Figur 2 dargestellt und wird mit dem Fahrunterstützungssystem 12 des Fahrzeugs 10 der ersten Ausführungsform durchgeführt. Das Verfahren wird unter zusätzlichem Bezug auf die Figuren 3 bis 5 beschrieben.

Das Verfahren beginnt mit Schritt S100, der ein Erfassen von Umgebungspunkten mit dem Umgebungssensor 14 innerhalb von dessen Sichtfeld 20 betrifft. Das Sichtfeld 20 umfasst bei dem einen LiDAR-basierten Umgebungssensor 14 typischerweise einen Winkelbereich von 120° bis 150° bezogen auf eine Bodenfläche 28. In horizontaler Richtung weist das Sichtfeld 20 demgegenüber einen geringeren Winkelbereich von beispielsweise 30° bis 40° auf.

In Schritt S110 erfolgt ein Auswählen einer Mehrzahl Regionen 22, 24 innerhalb des Sichtfelds 20 des Umgebungssensors 14. In diesem Ausführungsbeispiel werden eine erste Region 22 und eine zweite Region 24 ausgewählt, die sich in Fahrtrichtung 30 vor dem Fahrzeug 10 befinden. Die beiden Regionen 22, 24 sind dabei unterschiedlich geformt und sind benachbart angeordnet. Die erste Region 22, die dem Fahrzeug 10 näher liegt, weist horizontal eine Dreiecksform auf. Die zweite Region 24 schließt sich daran an und bildet eine Verlängerung der Dreiecksform der ersten Region 22. In vertikaler Richtung erstrecken sich die beiden Regionen 22, 24 über das gesamte Sichtfeld 20 des Umgebungssensors 14, wobei die Ausdehnungen der beiden Regionen 22, 24 sich entlang der vertikalen Richtung nicht ändern.

Die erste und zweite Region 22, 24 sind so ausgewählt, dass sie sich ausgehend von dem Umgebungssensor 14 in demselben Winkelsegment befinden, so dass die Empfindlichkeit des Umgebungssensors 14 in der ersten und zweiten Region 22, 24 identisch ist.

In Schritt S120 erfolgt ein Überprüfen der beiden Regionen 22, 24 auf Präsenz eines Objekts 26. Es wird überprüft, in welcher der beiden Regionen 22, 24 ein Objekt 26 präsent ist. In den Figuren 3 bis 5 ist beispielhaft dargestellt, dass ein Objekt 26 in keiner der beiden Regionen 22, 24 präsent ist, wie in Figur 3 dargestellt ist, nur in der zweiten Region 24 präsent ist, wie in Figur 4 dargestellt ist, oder in beiden Regionen 22, 24 präsent ist, wie in Figur 5 dargestellt ist.

Wenn in beiden Regionen 22, 24 ein Objekt 26 präsent ist, endet das Verfahren an dieser Stelle und kehrt zu Schritt S100 zurück. Die Erkennung von Niederschlag wird abgebrochen, da keine Region 22, 24 in Bezug auf von dem Umgebungssensor 14 erfasste Umgebungspunkte ausgewertet werden kann. Als Ergebnis für das Erkennen von Niederschlag wird eine vorherige Erkennung von Niederschlag ausgegeben.

In Schritt S130, der in dem beschriebenen Verfahren optional ist, wird in eine Anzahl von Regionen 22, 24 erfasst, in den sich ein Objekt 26 befindet. Wenn die Anzahl der Regionen 22, 24, in den sich ein Objekt 26 befindet, größer als ein vorgegebener Grenzwert ist, erfolgt eine neue Auswahl von Regionen 22, 24. Das Verfahren kehrt also zu Schritt S110 zurück.

In Schritt S140 erfolgt ein Bestimmen einer Punktedichte von mit dem Umgebungssensor 14 erfassten Umgebungspunkten in den Regionen 22, 24, in denen sich keine Objekte 26 befinden. Es wird eine dreidimensionale Punktedichte der jeweiligen Regionen 22, 24 bestimmt. Dazu wird eine Anzahl der erfassten Umgebungspunkte in jeder der Regionen 22, 24 ermittelt und durch das Volumen der jeweiligen Region 22, 24 geteilt. Dabei wird das Volumen der Regionen 22, 24 nur beim ersten Durchlauf des Verfahrens bestimmt und danach für weitere Durchläufe gespeichert.

In einer alternativen Ausführungsform umfasst das Bestimmen einer Punktedichte von mit dem Umgebungssensor 14 erfassten Umgebungspunkten in den Regionen 22, 24 ein Bestimmen einer gewichteten Punktedichte, wobei eine Punktedichte jeder Region 22, 24 mit einem Gewichtsfaktor multipliziert und anschließend die Summe der gewichteten Punktedichten durch eine Anzahl der Regionen 22, 24 dividiert wird.

Weiter alternativ kann eine zweidimensionale Bestimmung der Punktedichte erfolgen, indem die erfassten Umgebungspunkte in den Regionen 22, 24 auf die Bodenfläche 28 der jeweiligen Region 22, 24 projiziert werden, und die Punktedichte in der Bodenfläche 28 bestimmt wird.

Schritt S150 betrifft ein Erkennen von Niederschlag durch Vergleichen der Punktedichte in den Regionen 22, 24, in denen sich kein Objekt 26 befindet, mit einer Mehrzahl vorgegebener Grenzwerte, wobei die Mehrzahl Grenzwerte verschiedene Intensitäten des Niederschlags angeben. Die Mehrzahl vorgegebener Grenzwerte basieren auf einer Look-up Tabelle. Die Look-up Tabelle ist hier beispielhaft abhängig von einem Fahrzeugtyp, einem verwendeten Umgebungssensor 14, Sensorparametern des Umgebungssensors 14 oder anderen Charakteristika bestimmt. Die Sensorparameter umfassen in diesem Ausführungsbeispiel eine Winkelauflösung des Umgebungssensors 14.

Im Detail wird dazu die Punktedichte in den Regionen 22, 24 gemittelt. Diese gemittelte Punktedichte wird mit den Grenzwerten verglichen. Hier wird also die Punktedichte unter Berücksichtigung aller Regionen 22, 24 bestimmt, d.h. die Punktedichte wird für alle betrachteten Regionen 22, 24, in denen sich kein Objekt 26 befindet, gemeinsam bestimmt. Dabei können unterschiedliche Ausgestaltungen und Größen der Regionen 22, 24 berücksichtigt werden.

Das Erkennen von Niederschlag durch Vergleichen der Punktedichte in den Region 22, 24, in denen sich kein Objekt 26 befindet, mit den vorgegebenen Grenzwerten basiert auf empirisch ermittelten Grenzwerten. In einer alternativen Ausgestaltung erfolgt eine dynamische Anpassung der Grenzwerte, beispielsweise abhängig von verschiedenen Fahrsituationen oder Umgebungsbedingungen.

### Bezugszeichenliste

- 10: Fahrzeug
- 12: Fahrunterstützungssystem
- 14: Umgebungssensor, LiDAR-basierter Umgebungssensor
- 16: Recheneinrichtung
- 18: Datenübertragungsverbindung
- 20: Sichtfeld
- 22: erste Region
- 24: zweite Region
- 26: Objekt
- 28: Bodenfläche
- 30: Fahrtrichtung

## Patentansprüche

1. Verfahren zur Erkennung von Niederschlag mit einem Umgebungssensor (14) zur punktweisen Erfassung einer Umgebung eines Fahrzeugs (10), wobei der Umgebungssensor (14) zur punktweisen Erfassung einer Umgebung des Fahrzeugs (10) als LiDAR-basierter Umgebungssensor (14) ausgeführt ist, umfassend die Schritte
Erfassen von Umgebungspunkten mit dem Umgebungssensor (14) innerhalb von dessen Sichtfeld (20),
Auswählen wenigstens einer Region (22, 24) innerhalb des Sichtfelds (20) des Umgebungssensors (14),
Bestimmen einer Punktedichte von mit dem Umgebungssensor (14) erfassten Umgebungspunkten in der wenigstens einen Region (22, 24),
Erkennen von Niederschlag durch Vergleichen der Punktedichte in der wenigstens einen Region (22, 24) mit einem vorgegebenen Grenzwert,
Überprüfen der wenigstens einen Region (22, 24) auf Präsenz eines Objekts (26), und
Erkennen von Niederschlag durch Vergleichen der Punktedichte in der wenigstens einen Region (22, 24) mit einem vorgegebenen Grenzwert in solchen Regionen (22, 24), in denen sich kein Objekt (26) befindet, wobei Regionen (22, 24), in denen sich wenigstens ein Objekt (26) befindet, nicht zur Ermittlung von Niederschlag herangezogen werden.

2. Verfahren nach dem vorhergehenden Anspruch 1, **dadurch gekennzeichnet, dass**
das Überprüfen der wenigstens einen Region (22, 24) auf Präsenz eines Objekts (26) ein Überprüfen, ob in allen Regionen (22, 24) ein Objekt (26) präsent ist, umfasst, und
das Erkennen von Niederschlag bei Präsenz von Objekten (26) in allen Regionen (22, 24) ein Erkennen von Niederschlag basierend auf einer vorherigen Erkennung von Niederschlag umfasst.

3. Verfahren nach einem der vorhergehenden Ansprüche, **dadurch gekennzeichnet, dass**
das Auswählen wenigstens einer Region (22, 24) innerhalb des Sichtfelds (20) des Umgebungssensors (14) ein Auswählen einer Mehrzahl Regionen (22, 24) umfasst, und
das Erkennen von Niederschlag durch Vergleichen der Punktedichte in der Mehrzahl Region (22, 24) mit einem vorgegebenen Grenzwert ein Erkennen von Niederschlag durch Bestimmen einer Anzahl der Regionen (22, 24), in denen der Vergleich der Punktedichte mit dem vorgegebenen Grenzwert Niederschlag anzeigt, umfasst.

4. Verfahren nach einem der vorhergehenden Ansprüche, **dadurch gekennzeichnet, dass**
das Auswählen wenigstens einer Region (22,2 4) innerhalb des Sichtfelds (20) des Umgebungssensors (14) ein Auswählen einer Mehrzahl Regionen (22, 24) umfasst, und
das Erkennen von Niederschlag durch Vergleichen der Punktedichte in der Mehrzahl Region (22, 24) mit einem vorgegebenen Grenzwert ein Vergleichen der Punktedichte in der Mehrzahl Region (22, 24) mit dem vorgegebenen Grenzwert umfasst.

5. Verfahren nach einem der vorhergehenden Ansprüche, **dadurch gekennzeichnet, dass**
das Auswählen wenigstens einer Region (22, 24) innerhalb des Sichtfelds (20) des Umgebungssensors (14) ein Auswählen der wenigstens einer Region (22, 24) abhängig von verschiedenen Empfindlichkeiten des Umgebungssensors (14) in dem Sichtfeld (20) umfasst.

6. Verfahren nach einem der vorhergehenden Ansprüche, **dadurch gekennzeichnet, dass**
das Verfahren eine zusätzlichen Schritt zum Erfassen einer Anzahl von Regionen (22, 24), in den sich ein Objekt (26) befindet, umfasst, und
das Verfahren einen Schritt zur Durchführung einer veränderten Auswahl wenigstens einer Region (22, 24) innerhalb des Sichtfelds (20) des Umgebungssensors (14) umfasst, wenn die Anzahl von Regionen (22, 24), in den sich ein Objekt (26) befindet, größer als ein vorgegebener Grenzwert ist.

7. Verfahren nach einem der vorhergehenden Ansprüche, **dadurch gekennzeichnet, dass**
das Bestimmen einer Punktedichte von mit dem Umgebungssensor (14) erfassten Umgebungspunkten in der wenigstens einen Region (22, 24) ein Bestimmen der Punktedichte durch Dividieren einer Anzahl von Punkten einer jeweiligen Region (22, 24) durch eine Größe der jeweiligen Regionen (22,2 4) umfasst.

8. Verfahren nach einem der vorhergehenden Ansprüche, **dadurch gekennzeichnet, dass**
das Bestimmen einer Punktedichte von mit dem Umgebungssensor (14) erfassten Umgebungspunkten in der wenigstens einen Region (22, 24) ein Bestimmen einer gewichteten Punktedichte umfasst, wobei eine Punktedichte jeder Region (22, 24) mit einem Gewichtsfaktor multipliziert und anschließend die Summe der gewichteten Punktedichten durch eine Anzahl der Regionen (22, 24) dividiert wird.

9. Verfahren nach einem der vorhergehenden Ansprüche, **dadurch gekennzeichnet, dass**
das Erkennen von Niederschlag durch Vergleichen der Punktedichte in der wenigstens einen Region (22, 24) mit einem vorgegebenen Grenzwert ein Vergleichen der Punktedichte in der wenigstens einen Region (22, 24) mit einer Mehrzahl vorgegebener Grenzwerte umfasst, wobei die Mehrzahl Grenzwerte verschiedene Intensitäten des Niederschlags angeben.

10. Verfahren nach dem vorhergehenden Anspruch 9, **dadurch gekennzeichnet, dass**
das Vergleichen der Punktedichte in der wenigstens einen Region (22, 24) mit einer Mehrzahl vorgegebener Grenzwerte ein Vergleichen der Punktedichte in der wenigstens einen Region (22, 24) mit einer Mehrzahl vorgegebener Grenzwerte basierend auf einer Look-up Tabelle umfasst.

11. Verfahren nach einem der vorhergehenden Ansprüche, **dadurch gekennzeichnet, dass**
das Verfahren einen Schritt zum Ermitteln des vorgegebenen Grenzwerts basierend auf Sensorparametern des Umgebungssensors (14) umfasst.

12. Fahrunterstützungssystem (12) für ein Fahrzeug (10) mit einem Umgebungssensor (14) zur punktweisen Erfassung einer Umgebung des Fahrzeugs (10) und einer Recheneinrichtung (16), die über eine Datenübertragungsverbindung (18) miteinander verbunden sind, wobei der Umgebungssensor (14) zur punktweisen Erfassung einer Umgebung des Fahrzeugs (10) als LiDAR-basierter Umgebungssensor (14) ausgeführt ist und wobei
das Fahrunterstützungssystem (12) ausgeführt ist, das Verfahren nach einem der vorhergehenden Ansprüche auszuführen.

## Claims

1. Method for detecting precipitation by means of an environment sensor (14) for capturing an environment of a vehicle (10) point by point, wherein the environment sensor (14) for capturing an environment of the vehicle (10) point by point is embodied as a LiDAR-based environment sensor (14), comprising the steps of
capturing environment points by means of the environment sensor (14) within the latter's field of view (20),
selecting at least one region (22, 24) within the field of view (20) of the environment sensor (14),
determining a point density of environment points captured by means of the environment sensor (14) in the at least one region (22, 24),
detecting precipitation by comparing the point density in the at least one region (22, 24) with a predefined limit value,
checking the at least one region (22, 24) for the presence of an object (26), and
detecting precipitation by comparing the point density in the at least one region (22, 24) with a predefined limit value in such regions (22, 24) in which no object (26) is located, wherein regions (22, 24) in which at least one object (26) is located are not used for ascertaining precipitation.

2. Method according to the preceding Claim 1, **characterized in that**
checking the at least one region (22, 24) for the presence of an object (26) comprises checking whether an object (26) is present in all regions (22, 24), and
detecting precipitation when objects (26) are present in all regions (22, 24) comprises detecting precipitation on the basis of a previous detection of precipitation.

3. Method according to either of the preceding claims, **characterized in that**
selecting at least one region (22, 24) within the field of view (20) of the environment sensor (14) comprises selecting a plurality of regions (22, 24), and
detecting precipitation by comparing the point density in the plurality of regions (22, 24) with a predefined limit value comprises detecting precipitation by determining a number of regions (22, 24) in which the comparison of the point density with the predefined limit value indicates precipitation.

4. Method according to any of the preceding claims,
**characterized in that**
selecting at least one region (22, 24) within the field of view (20) of the environment sensor (14) comprises selecting a plurality of regions (22, 24), and
detecting precipitation by comparing the point density in the plurality of regions (22, 24) with a predefined limit value comprises comparing the point density in the plurality of regions (22, 24) with the predefined limit value.

5. Method according to any of the preceding claims,
**characterized in that**
selecting at least one region (22, 24) within the field of view (20) of the environment sensor (14) comprises selecting the at least one region (22, 24) depending on different sensitivities of the environment sensor (14) in the field of view (20).

6. Method according to any of the preceding claims,
**characterized in that**
the method comprises an additional step for capturing a number of regions (22, 24) in which an object (26) is located, and
the method comprises a step for carrying out a modified selection of at least one region (22, 24) within the field of view (20) of the environment sensor (14) if the number of regions (22, 24) in which an object (26) is located is greater than a predefined limit value.

7. Method according to any of the preceding claims,
**characterized in that**
determining a point density of environment points captured by means of the environment sensor (14) in the at least one region (22, 24) comprises determining the point density by dividing a number of points of a respective region (22, 24) by a size of the respective regions (22, 24).

8. Method according to any of the preceding claims,
**characterized in that**
determining a point density of environment points captured by means of the environment sensor (14) in the at least one region (22, 24) comprises determining a weighted point density, wherein a point density of each region (22, 24) is multiplied by a weight factor and then the sum of the weighted point densities is divided by a number of regions (22, 24).

9. Method according to any of the preceding claims,
**characterized in that**
detecting precipitation by comparing the point density in the at least one region (22, 24) with a predefined limit value comprises comparing the point density in the at least one region (22, 24) with a plurality of predefined limit values, wherein the plurality of limit values specify different intensities of precipitation.

10. Method according to the preceding Claim 9,
**characterized in that**
comparing the point density in the at least one region (22, 24) with a plurality of predefined limit values comprises comparing the point density in the at least one region (22, 24) with a plurality of predefined limit values on the basis of a look-up table.

11. Method according to any of the preceding claims,
**characterized in that**
the method comprises a step for ascertaining the predefined limit value on the basis of sensor parameters of the environment sensor (14).

12. Driving assistance system (12) for a vehicle (10) comprising an environment sensor (14) for capturing an environment of the vehicle (10) point by point and a computing device (16), which are connected to one another via a data transmission connection (18), wherein the environment sensor (14) for capturing an environment of the vehicle (10) point by point is embodied as a LiDAR-based environment sensor (14) and wherein
the driving assistance system (12) is designed to carry out the method according to any of the preceding claims.

## Revendications

1. Procédé servant à détecter des précipitations avec un capteur d'environnement (14) servant à détecter point par point un environnement d'un véhicule (10), le capteur d'environnement (14) servant à détecter point par point un environnement du véhicule (10) étant réalisé en tant que capteur d'environnement (14) à base de LiDAR, comprenant les étapes consistant à
détecter des points d'environnement à l'aide du capteur d'environnement (14) à l'intérieur de son champ de vision (20),
sélectionner au moins une région (22, 24) à l'intérieur du champ de vision (20) du capteur d'environnement (14), définir une densité de points des points d'environnement détectés à l'aide du capteur d'environnement (14) dans la ou les régions (22, 24),
détecter des précipitations en comparant la densité de points dans la ou les régions (22, 24) à une valeur limite spécifiée,
vérifier la ou les régions (22, 24) pour y déceler la présence d'un objet (26), et
détecter des précipitations en comparant la densité de points dans la ou les régions (22, 24) à une valeur limite spécifiée dans les régions (22, 24) dans lesquelles il ne se trouve pas d'objet (26), les régions (22, 24) dans lesquelles il se trouve au moins un objet (26) n'étant pas utilisées pour déterminer des précipitations.

2. Procédé selon la revendication 1 précédente,
**caractérisé en ce que**
la vérification de la présence d'un objet (26) dans la ou les régions (22, 24) comprend le fait de vérifier si un objet (26) est présent dans toutes les régions (22, 24), et
la détection de précipitations en cas de présence d'objets (26) dans toutes les régions (22, 24) comprend une détection de précipitations sur la base d'une détection antérieure de précipitations.

3. Procédé selon l'une des revendications précédentes,
**caractérisé en ce que**
la sélection de la ou des régions (22, 24) à l'intérieur du champ de vision (20) du capteur d'environnement (14) comprend une sélection d'une pluralité de régions (22, 24), et
la détection de précipitations en comparant la densité de points dans la pluralité de régions (22, 24) à une valeur limite spécifiée comprend une détection de précipitations par détermination d'un nombre de régions (22, 24) dans lesquelles la comparaison de la densité de points à la valeur limite spécifiée indique des précipitations.

4. Procédé selon l'une des revendications précédentes,
**caractérisé en ce que**
la sélection de la ou des régions (22, 24) à l'intérieur du champ de vision (20) du capteur d'environnement (14) comprend une sélection d'une pluralité de régions (22, 24), et
la détection de précipitations en comparant la densité de points dans la pluralité de régions (22, 24) à une valeur limite spécifiée comprend une comparaison de la densité de points dans la pluralité de régions (22, 24) à la valeur limite spécifiée.

5. Procédé selon l'une des revendications précédentes,
**caractérisé en ce que**
la sélection de la ou des régions (22, 24) à l'intérieur du champ de vision (20) du capteur d'environnement (14) comprend une sélection de la ou des régions (22, 24) en fonction de différentes sensibilités du capteur d'environnement (14) dans le champ de vision (20).

6. Procédé selon l'une des revendications précédentes,
**caractérisé en ce que**
le procédé comprend une étape supplémentaire de détection d'un nombre de régions (22, 24) dans lesquelles se trouve un objet (26), et
le procédé comprend une étape de mise en œuvre d'une sélection modifiée de la ou des régions (22, 24) à l'intérieur du champ de vision (20) du capteur d'environnement (14) lorsque le nombre de régions (22, 24) dans lesquelles se trouve un objet (26) est supérieur à une valeur limite spécifiée.

7. Procédé selon l'une des revendications précédentes,
**caractérisé en ce que**
la détermination d'une densité de points des points d'environnement détectés à l'aide du capteur d'environnement (14) dans la ou les régions (22, 24) comprend une détermination de la densité de points par division d'un nombre de points d'une région respective (22, 24) par une taille des régions respectives (22, 24).

8. Procédé selon l'une des revendications précédentes,
**caractérisé en ce que**
la détermination d'une densité de points des points d'environnement détectés à l'aide du capteur d'environnement (14) dans la ou les régions (22, 24) comprend une détermination d'une densité de points pondérée, une densité de points de chaque région (22, 24) étant multipliée par un facteur de pondération, et la somme des densités de points pondérées étant ensuite divisée par un nombre des régions (22, 24).

9. Procédé selon l'une des revendications précédentes,
**caractérisé en ce que**
la détection de précipitations en comparant la densité de points dans la ou les régions (22, 24) à une valeur limite spécifiée comprend une comparaison de la densité de points dans la ou les régions (22, 24) à une pluralité de valeurs limites spécifiées, la pluralité de valeurs limites indiquant différentes intensités des précipitations.

10. Procédé selon la revendication 9 précédente,
**caractérisé en ce que**
la comparaison de la densité de points dans la ou les régions (22, 24) à une pluralité de valeurs limites spécifiées comprend une comparaison de la densité de points dans la ou les régions (22, 24) à une pluralité de valeurs limites spécifiées sur la base d'une table de correspondance.

11. Procédé selon l'une des revendications précédentes,
**caractérisé en ce que**
le procédé comprend une étape de détermination de la valeur limite spécifiée sur la base de paramètres de capteur du capteur d'environnement (14).

12. Système d'aide à la conduite (12) pour un véhicule (10) comprenant un capteur d'environnement (14) servant à détecter point par point un environnement du véhicule (10) et un système de calcul (16), qui sont reliés l'un à l'autre par l'intermédiaire d'une liaison de transmission de données (18), le capteur d'environnement (14) servant à détecter point par point un environnement du véhicule (10) étant réalisé en tant que capteur d'environnement (14) à base de LiDAR, et
le système d'aide à la conduite (12) étant conçu pour mettre en œuvre le procédé selon l'une des revendications précédentes.
